# EUROPEAN PATENT SPECIFICATION

(11) **EP 1 189 739 B1**
(45) Date of publication and mention of the grant of the patent: **30.06.2004**
(21) Application number: 00915070.7
(22) Date of filing: 05.04.2000
(51) Int. Cl.: B29C 45/28

(54) **INJECTION NOZZLE AND METHOD FOR INJECTION MOLDING**
SPRITZGIESSDÜSE UND SPRITZGIESSVERFAHREN
INJECTEUR ET PROCEDE DE MOULAGE PAR INJECTION

(30) Priority: 04.06.1999 US 325895
(43) Date of publication of application: 27.03.2002
(73) Proprietor: Husky Injection Molding Systems Ltd., Bolton, Ontario L7E 5S5 (CA)
(72) Inventor: CATOEN, Bruce, Georgetown, Ontario L7G 5J4 (CA); PURI, Rajan, Mississauga, Ontario L5R 3G9 (CA)
(74) Representative: Dearling, Bruce Clive
(86) International application number: PCT/CA2000/000365
(87) International publication number: WO 2000/074920

(56) References cited:
- WO-A-94/14591
- WO-A-99/22926
- US-A- 2 828 507
- US-A- 4 416 608
- PATENT ABSTRACTS OF JAPAN vol. 16, no. 464 (M-1316), 28 September 1992 (1992-09-28) -& JP 04 164618 A (MITSUBISHI MATERIALS CORP), 10 June 1992 (1992-06-10)

## Description

### TECHNICAL FIELD

When injection molding plastic preforms, as for example preforms of polyethylene terephthalate (PET), some systems form a gate nub or projection area from the molded part that is allowed to solidify on the molded part and is later removed from the molded part in a subsequent operation. This grate nub or projection is a depository for undesirable resin crystallinity that typically forms in the mold gate area. If the nub is subsequently cut off one has a molded preform which is free. of gate crystallinity. Such a system is shown in U.S. Patent 4,588,370 to Ichizawa et al., patented May 13, 1986.

### BACKGROUND OF THE INVENTION

A second approach is to cause the gate nub to break off the molded part during mold opening and then eject the removed nub from the gate area when the mold is open. This is shown in Japanese Patent Application No. 52-151358, published December 15, 1977. In this procedure the valve stem of a hot runner has a "gate puller" undercut machined into its end so that the gate nub solidifies and forms around the gate puller when the valve stem is in the gate closed position. Then as the mold opens the valve stem is retracted to break off the nub which then appears to fall free of the mold when the mold cavity is moved away from the hot runner system. This considerably complicates mold construction and does not appear to provide a foolproof nub removal and ejection system.

The automatic degating of a sprue is known in other molding applications. U.S. Patent 4,820,467 to Ehrler et al., patented April 11, 1989, shows a system in which a hot runner molds a cold sprue gated disc. After solidification of the sprue a sleeve surrounding the nozzle tip advances to eject the sprue and degate it from the molded part and simultaneously form a hole therein. The cold, degated sprue is then automatically conveyed away from the gate area down a chute in the mold.

U.S. Patent 5,346,659 to Buhler et al., patented September 13, 1994, shows another cold sprue gating and ejection system similar to the '467 patent in which the ejection means is built into the top of the mold core.

U.S. patent 5,423,672 to Gordon, patented June 13, 1995, shows a molding device for forming a disc with a hole therein. This patent shows a valve gated hot runner in which the valve stem is moved to an intermediate position by means of a dual piston combination. In the disc molding operation the valve stem is first moved forward to open the valve gate and allow resin to fill the mold cavity. Next the valve stem is partially retracted to block the melt flow and allow a lower part of the valve stem to form the hole in the disc. Finally, the valve stem is fully retracted to pull its hole forming section out of the molded part and to allow the molded part to be ejected conventionally from the core side of the mold.

U.S. Patent 3,671,159 to Greenberg et al., patented March 6, 1970, shows a valve gating system in which the valve stem is hollow and conveys compressed air to assist in ejecting the part as the mold is opened. The valve stem is advanced into the mold cavity to expose the air channel orifice in the valve stem and to allow it to assist in the mold opening and part ejection. A system such as this, however, risks blocking the air passages during injection of the melt while the mold cavity is being filled.

PCT publication WO 94/14591 to Taniyama, published July 7 1994, shows a hot runner valve stem being used in the common mode of controlling melt flow, and alternately as a ejector pin in conjunction with other dedicated ejector pins. The valve stem has three positions, the first two being provided by a piston arrangement, and the third provided by reciprocation of an ejector plate that houses the valve stem piston arrangement. A common elector plate actuates both the valve stem assembly and the dedicated ejector pins, and hence the valve stem cannot act as an ejector independently. Application of this invention is limited to situations where the mold ejection means and injection means are on the same side of the mold cavity. This invention does not describe the. unique problems and solutions related to molds with gate nubs.

U.S. Patent 2,828,507 to Strauss, patented April 1, 1958, shows a three position hot runner valve stem used to control melt flow and act as an ejector pin. The valve stem is coupled to a hydraulically actuated yoke plate that is operated between three positions defined by mechanical limit pins and the yoke stroke limits. The positioning means provides that while the mold is open the valve stem can be extended but not retracted without opening the melt channel. This invention provides for valve stem control only as a function of the machine cycle, and does not provide for independent valve stem actuation (e.g. clear short-shots). This invention does not describe the unique problems and solutions related to molds with gate nubs.

Patent Abstracts of Japan vol. 16, no. 464 (M-1316), 28 September 1992 & publication JP-A-04164618 to Takeda at al. published June 10 1992, shows a three position hot runner valve stem used to control melt flow and act as an ejector pin. The valve stem is actuated by a hydraulic or pneumatic cylinder between its positions by means of closed loop electronic control using position sensor feedback and a controller, that can be regarded as unnecessarily complicated. This invention does not describe the unique problems and solutions related to molds with gate nubs.

European patent application 97114406.8 (EP-A-0825007) describes an apparatus for making multi-layer molded articles in which a shut-off pin in driven (within a multistage molding cycle) to multiple positions that align with resin supply channels or a shut-off position.

It is a principal object of the present invention to provide an improved injection nozzle and method for injection molding which includes a movable valve stem and a valve gate nub area.

It is a further object of the present invention to provide a device and method as aforesaid in which the valve stem is conveniently and expeditiously used to advance into the mold cavity-valve gate nub area in order to aid in the ejection of the molded part and to clear debris from the valve gate nub area.

Further objects and advantages of the present invention will appear hereinbelow.

### Summary of the Invention

In accordance with the present invention, the foregoing objects and advantages are readily obtained.

In a first aspect of the present invention there is provided a valve gate assembly for injection molding, in use, resin into a mold cavity, the valve gate assembly comprising: an injection nozzle having a nozzle body and a nozzle tip, the nozzle body having an internal flow channel therein communicating with an injection orifice in the tip, which injection orifice in turn communicates, in use, with said mold cavity for the transfer, in use, of resin to the mold cavity; a valve gate area between the mold cavity and injection orifice; a valve stem operatively positioned in the internal flow channel of the injection nozzle; and a valve stem actuator coupled to move the valve stem between an open position retracted from the injection orifice permitting the flow of resin to the mold cavity, a closed position blocking the injection orifice and preventing flow of resin to the mold cavity, and an advanced position past the closed position and within the valve gate area to clear the valve gate area; the valve gate characterized in that: the valve stem actuator is configured as an independently operable actuator that is operational independently of commencement of a molding cycle, such that the valve stem actuator is selectively operable to cause, in advance of the molding cycle, extension of the valve stem sufficiently beyond the nozzle tip to cause the valve stem to clear away debris accumulated in front of the valve stem.

In another aspect of the present invention there is provided a method of operating a valve gate assembly associated with an injection mold, the valve gate assembly containing a nozzle body and a nozzle tip, the nozzle body having an internal channel terminating at the nozzle tip, the valve gate assembly further including a valve stem located within the internal channel and a valve stem actuator coupled to the valve stem to control a position of the valve stem relative to the nozzle tip, the method characterized by: in advance of commencement of a molding cycle in the injection mold, selectively and independently operating the valve stem actuator to extend the valve stem beyond the nozzle tip such that the valve stem acts to clear away debris accumulated in front of the valve stem.

The in a further aspect of the present invention there is provided a method of clearing plastics debris from the vicinity of a gate orifice of a gate pad, the method comprising: forcing a valve stem, of a valve gate assembly, to extend through the gate orifice independently of the use of the valve gate assembly in an operational cycle of an injection molding process.

Further features of the present invention will appear hereinbelow.

### Brief Description of the Drawings

The present invention will be more readily understandable from a consideration of the accompanying illustrative drawings showing a preferred embodiment, wherein:
Figure 1 is a sectional view through a nozzle assembly of the present invention with the valve gate open and the valve stem retracted;
Figure 2 is a sectional view similar to Figure 1 with the valve gate closed and the valve stem in the closed position; and
Figure 3 is a sectional view similar to Figure 1 with the valve stem in the advanced position.

### Detailed Description of a Preferred Embodiment

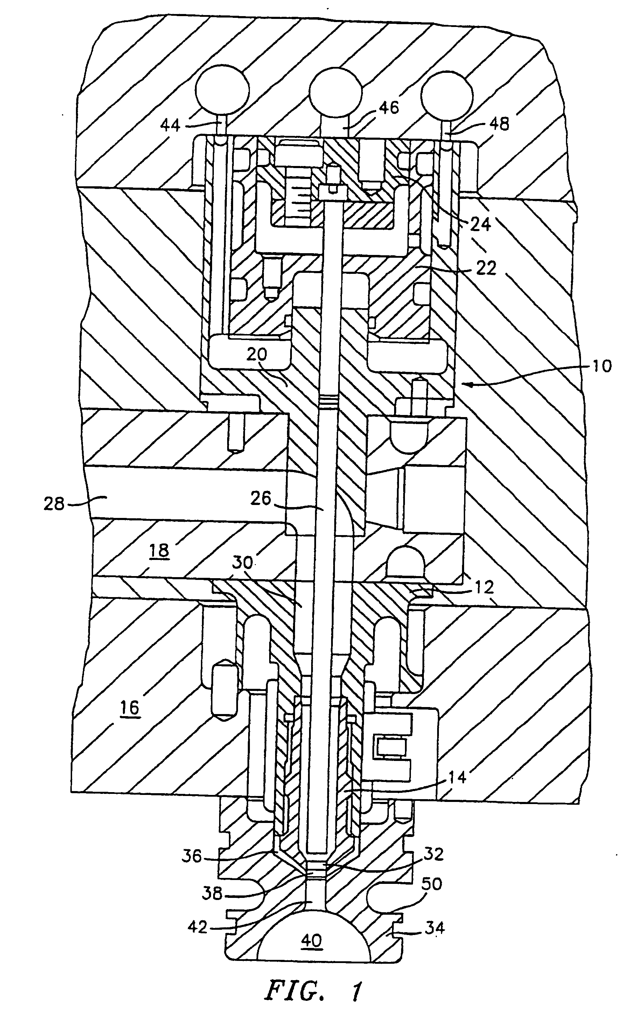

Referring to the drawings which show a preferred embodiment of the nozzle assembly of the present invention, Figure 1 to 3 show the nozzle assembly in each of three valve stem positions. Figure 1 shows injection nozzle 10 including nozzle housing 12 and nozzle tip 14 secured thereto. The injection nozzle is located in mold manifold plate 16 and supporting manifold 18. Mounted in manifold 18 is valve bushing 20 that contains two pneumatic pistons 22, 24 to which is attached valve stem 26'.

Melt channel 28 in manifold 18 is connected to central melt channel 30 in nozzle housing 12 which in turn leads to injection orifice or gate orifice 32 in gate pad 34. Insulator 36 occupies the space between nozzle tip 14 and gate pad 34 and also contains a melt channel opening 38 therein. When the valve stem 26 is in the fully retracted position as shown in Figure 1 resin can be injected through the melt channels to fill mold cavity 40 in a known fashion. This mold cavity has a gate nub 42 so that when the mold cavity 40 and nub 42 are filled with resin a molded part is formed having a nub.

Pneumatic pistons 22, 24 are operated by air pressure through lines 44, 46, 48 from a source of compressed air (not shown) such that by directing compressed air appropriately valve stem 26 can be moved to one of three positions. In Figure 1 both pistons 22 and 24 are fully retracted by compressed air causing both of the pistons to move upward thereby fully retracting valve stem 26 within nozzle housing 12 and permitting resin to flow into the gate nub and mold cavity. Thus, in Figure 1 compressed air is introduced into line 48 causing piston 24 to retract and is also introduced into line 44 causing piston 22 to retract. This fully retracts valve stem 26.

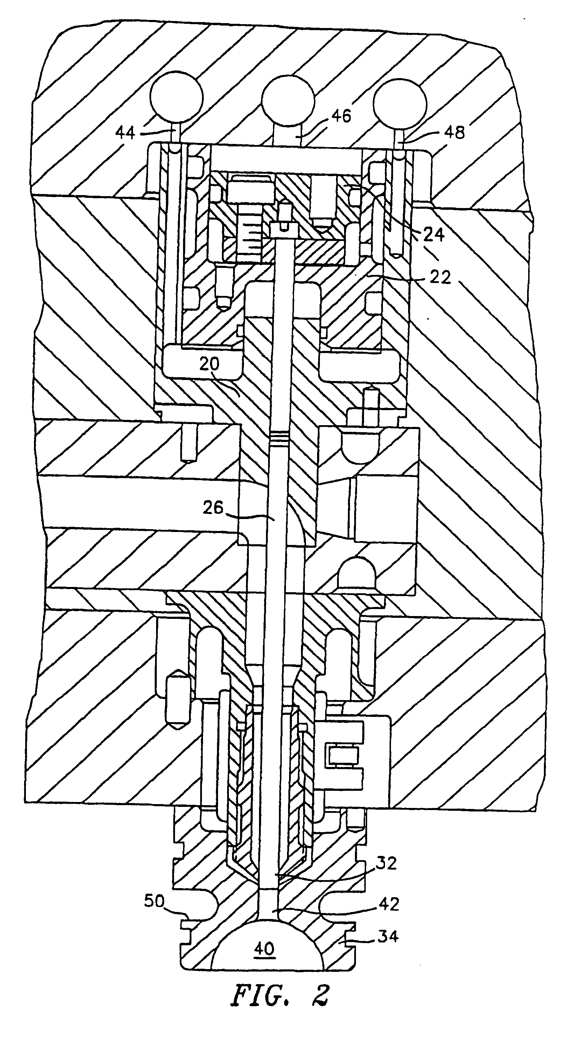

Figure 2 shows valve stem 26 in the gate closed position shutting off resin flow to the filled mold cavity 40 and to the filled gate nub 42. The valve stem is moved to the gate closed position shown in Figure 2 by introducing compressed air into line 44 to maintain piston 22 in the retracted position and also introduced into line 46 to advance piston 46 slightly forward and thus close injection orifice 32. Cooling channels 50 in gate pad 34 cause resin in the mold cavity 40 and gate nub 42 to solidify prior to opening the mold.

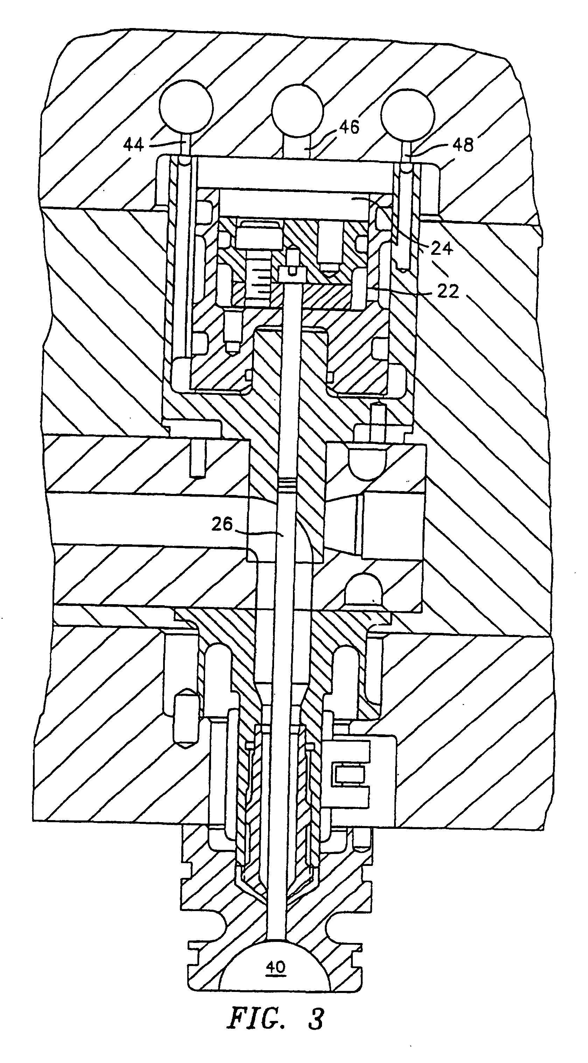

Figure 3 shows valve stem 26 in the advanced position protruding into the gate nub area and thereby assisting in the ejection of the molded part as the mold is opened and also clearing any debris that may have accumulated in the gate nub area. The valve stem is moved to the advanced position shown in Figure 3 by exhausting air from line 44 to permit piston 22 to move forward and introducing compressed air into line 46 to move both pistons 22 and 24 forward.

Debris can accumulate in front of the valve stem in the nub from a variety of causes such as; the stem is opened too soon by the operator in the process; or a short shot is molded (a partially filled cavity) wherein the partial molding sticks in the cavity and cannot be ejected normally from the core side of the mold; or if during maintenance the stem is operated manually dislodging frozen plastic in the area; or plastic may leak around the side of the stem and partially solidify in the nub area.
By advancing the valve stem 26 in accordance with the present invention as shown in Figure 3, prior to restarting, any such leakage or drool can be easily and conveniently pushed away from the gate area thereby completely clearing the gate area for a smooth restart of the molding operation.

Thus, the present invention provides a simple and expeditious three position hot runner valve stem that can advance the valve stem into the mold cavity nub area to assist in part ejection during mold opening and also to clear debris from the area.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its scope as defined by the claims.

## Claims

1. A valve gate assembly (10, 12, 14) for injection molding, in use, resin into a mold cavity (40), the valve gate assembly (10, 12, 14) comprising:
an injection nozzle having a nozzle body and a nozzle tip (14), the nozzle body having an internal flow channel (30) therein communicating with an injection orifice (32) in the tip (14), which injection orifice (32) in turn communicates, in use, with said mold cavity (40) for the transfer, in use, of resin to the mold cavity (40);
a valve gate area (42) between the mold cavity (40) and injection orifice (32);
a valve stem (26) operatively positioned in the internal flow channel (30) of the injection nozzle (10, 12, 14); and
a valve stem actuator (22, 24, 44, 46, 48) coupled to move the valve stem (26) between an open position retracted from the injection orifice (32) permitting the flow of resin to the mold cavity (40), a closed position blocking the injection orifice (32) and preventing flow of resin to the mold cavity (40), and an advanced position past the closed position and within the valve gate area (42) to clear the valve gate area;
the valve gate **characterized in that**:
the valve stem actuator (22, 24) is configured as an independently operable actuator that is operational independently of commencement of a molding cycle, such that the valve stem actuator (22, 24) is selectively operable to cause, in advance of the molding cycle, extension of the valve stem (26) sufficiently beyond the nozzle tip (14, 32) to cause the valve stem to clear away debris accumulated in front of the valve stem (26).

2. The valve gate assembly (10, 12, 14) according to claim 1, wherein the valve gate area includes a passageway between the mold cavity (40) and the injection orifice (32), wherein in the advanced position the valve stem is moved to substantially fill the passageway.

3. The valve gate assembly (10, 12, 14) according to claim 2, wherein said valve stem (26) has a forward wall which extends across said passageway in the advanced position and a continuous annular wall extending therefrom which extends completely within said passageway in the advanced position.

4. The valve gate assembly (10, 12, 14) according to claim 1, 2 or 3, including at least one piston (22, 24), connected to said valve stem (26), operative to move said valve stem (26) between the open, closed and advanced positions.

5. The valve gate assembly (10, 12, 14) according to claim 4, including at least three air inlets operative to move said at least one piston (22, 24).

6. The valve gate assembly (10, 12, 14) according to any preceding claim, wherein said internal flow channel (28) is in communication with a hot runner channel.

7. The valve gate assembly (10, 12, 14) according to any preceding claim, wherein said gate orifice is configured sealingly to receive said valve stem to substantially stop the flow of resin to the mold cavity (40).

8. A method of operating a valve gate assembly (10, 12, 14) associated with an injection mold (34, 40), the valve gate assembly (10, 12, 14) containing a nozzle body and a nozzle tip (14, 32), the nozzle body having an internal channel (30) terminating at the nozzle tip (14, 32), the valve gate assembly (10, 12, 14) further including a valve stem (26) located within the internal channel (30) and a valve stem actuator (22, 24) coupled to the valve stem (26) to control a position of the valve stem relative to the nozzle tip (14, 32), the method **characterized by**:
in advance of commencement of a molding cycle in the injection mold (34, 40), selectively and independently operating the valve stem actuator (22, 24) to extend the valve stem (26) beyond the nozzle tip (14, 32) such that the valve stem (26) acts to clear away debris accumulated in front of the valve stem (26).

9. A method of clearing plastics debris from the vicinity of a gate orifice (42) of a gate pad (34), the method comprising: forcing a valve stem (26), of a valve gate assembly (10, 12, 14), to extend through the gate orifice independently of the use of the valve gate assembly in an operational cycle of an injection molding process.

## Patentansprüche

1. Ventileinlaufanordnung (10, 12, 14) für das Spritzgießen, wobei im Betrieb Harz in einen Formhohlraum (40) eingespritzt wird, wobei die Ventileinlaufanordnung (10, 12, 14) aufweist:
eine Einspritzdüse mit einem Düsenkörper und einer Düsenspitze (14), wobei der Düsenkörper einen inneren Strömungskanal (30) aufweist, der mit einer Einspritzöffnung (32) in der Spitze (14) in Verbindung steht, wobei die Einspritzöffnung (32) ihrerseits im Betrieb mit dem Formhohlraum (40) in Verbindung steht, um dem Formhohlraum (40) im Betrieb Harz zuzuführen;
eine Ventileinlaufzone (42) zwischen dem Formhohlraum (40) und der Einspritzöffnung (32);
einen Ventilschaft (26), der im inneren Strömungskanal (30) der Einspritzdüse (10, 12, 14) betätigbar angeordnet ist; und
einen Ventilschaftbetätiger (22, 24, 44, 46, 48), der mit dem Ventilschaft (26) gekuppelt ist, um diesen zwischen einer Offenstellung, in welcher er von der Einspritzöffnung (32) zurückgezogen ist, wodurch der Strom des Harzes zum Formhohlraum (40) ermöglicht wird, und einer Schließstellung bewegbar ist, welche die Einspritzöffnung (32) blockiert und den Harzstrom zum Formhohlraum (40) verhindert, sowie einer über die Schließstellung hinaus vorgeschobenen Stellung innerhalb der Ventileinlaufzone (42), um die Ventileinlaufzone freizugeben;
wobei der Ventileinlauf **dadurch gekennzeichnet ist, daß**:
der Ventilschaftbetätiger (22, 24) als unabhängig betätigbare Vorrichtung ausgebildet ist, die unabhängig vom Beginn des Formungszyklus betätigbar ist, derart, daß der Ventilschaftbetätiger (22, 24) selektiv betätigbar ist, um beim Fortschreiten des Formungszyklus ein Ausfahren des Ventilschaftes (26) über die Düsenspitze (14, 32) hinaus in ausreichendem Maße zu bewirken, damit der Ventilschaft jeglichen Abfall, der sich vor dem Ventilschaft (26) angesammelt hat, wegräumt.

2. Ventileinlaufanordnung (10, 12, 14) nach Anspruch 1, bei welcher die Ventileinlaufzone einen Durchgang zwischen dem Formhohlraum (40) und der Einspritzdüse (32) aufweist, wobei in der vorgeschobenen Stellung der Ventilschaft so bewegt wird, daß er den Durchgang im wesentlichen füllt.

3. Ventileinlaufanordnung (10, 12, 14) nach Anspruch 2, bei welcher der Ventilschaft (26) eine Vorderwand aufweist, die sich in der vorgeschobenen Stellung quer über den Durchgang erstreckt, und eine kontinuierliche Ringwand, die sich vom Schaft wegerstreckt, um den Durchgang in der vorgeschobenen Stellung vollständig zu füllen.

4. Ventileinlaufanordnung (10, 12, 14) nach Anspruch 1, 2 oder 3, mit zumindest einem Kolben (22, 24), der mit dem Ventilschaft (26) verbunden ist, um den Ventilschaft (26) zwischen der Offenstellung, Schließstellung und vorgeschobenen Stellung zu bewegen.

5. Ventileinlaufanordnung (10, 12, 14) nach Anspruch 4, mit zumindest drei Lufteinlässen, die mit dem zumindest einen Kolben (22, 24) in Wirkverbindung stehen.

6. Ventileinlaufanordnung (10, 12, 14) nach einem der vorhergehenden Ansprüche, bei welcher der innere Strömungskanal (28) mit einem Heißkanal in Verbindung steht.

7. Ventileinlaufanordnung (10, 12, 14) nach einem der vorhergehenden Ansprüche, bei welcher die Einlauföffnung so ausgebildet ist, daß sie den Ventilschaft abdichtend aufnimmt, um den Harzstrom zum Formhohlraum (40) im wesentlichen zu stoppen.

8. Verfahren zum Betätigen einer Ventileinlaufanordnung (10, 12, 14), die einer Spritzgießform (34, 40) zugeordnet ist, wobei die Ventileinlaufanordnung (10, 12, 14) einen Düsenkörper und eine Düsenspitze (14, 32) aufweist, wobei der Düsenkörper einen inneren Kanal (30) hat, der in der Düsenspitze (14, 32) endet, und wobei die Ventileinlaufanordnung (10, 12, 14) ferner einen Ventilschaft (26) aufweist, der innerhalb des inneren Kanals (30) angeordnet ist, und einen Ventilschaftbetätiger (22, 24), der mit dem Ventilschaft (26) gekuppelt ist, um eine Position des Ventilschaftes relativ zur Düsenspitze (14, 32) zu steuern, wobei das Verfahren **dadurch gekennzeichnet ist, daß**:
vor dem Beginn eines Formungszyklus in der Spritzgießform (34, 40) der Ventilschaftbetätiger (22, 24) selektiv und unabhängig betätigt wird, um den Ventilschaft (26) über die Düsenspitze (14, 32) hinaus auszufahren, derart, daß der Ventilschaft (26) jeglichen Abfall beseitigt, der sich vor dem Ventilschaft (26) angesammelt hat.

9. Verfahren zum Wegräumen von Kunststoffabfall von der Nähe einer Einlauföffnung (42) eines Ventileinlaufblockes (34), wobei das Verfahren umfaßt: Hindurchdrücken eines Ventilschaftes (26) einer Ventileinlaufanordnung (10, 12, 14) durch die Ventileinlauföffnung, unabhängig von der Verwendung der Ventileinlaufanordnung in einem Betriebszyklus des Spritzformungsvorganges.

## Revendications

1. Ensemble formant vanne à tiroir (10, 12, 14) pour le moulage par injection, en utilisation, de résine dans une cavité de moule (40), l'ensemble formant vanne à tiroir (10, 12, 14) comprenant :
une buse d'injection ayant un corps de buse et un embout de buse (14), le corps de buse comportant à l'intérieur un canal d'écoulement interne (30) qui communique avec un orifice d'injection (32) dans l'embout (14), ledit orifice d'injection (32) communiquant à son tour, en utilisation, avec ladite cavité de moule (40) pour le transfert, en utilisation, de résine vers la cavité de moule (40) ;
une zone de tiroir de vanne (42), entre la cavité de moule (40) et l'orifice d'injection (32) ;
une tige de vanne (26) fonctionnellement positionnée dans le canal d'écoulement interne (30) de la buse d'injection (10, 12, 14) ; et
un actionneur de tige de vanne (22, 24, 44, 46, 48) couplé pour déplacer la tige de vanne (26) entre une position ouverte rétractée de l'orifice d'injection (32) et permettant l'écoulement de résine vers la cavité de moule (40), une position fermée bloquant l'orifice d'injection (32) et empêchant l'écoulement de résine vers la cavité de moule (40), et une position avancée au-delà de la position fermée et à l'intérieur de la zone de tiroir de vanne (42) pour dégager la zone de tiroir de vanne ;
ledit tiroir de vanne étant **caractérisé en ce que** :
l'actionneur de tige de vanne (22, 24) est configuré comme un actionneur capable de fonctionner indépendamment, qui fonctionne indépendamment du commencement d'un cycle de moulage, tel que l'actionneur de tige de vanne (22, 24) peut être sélectivement mis en fonctionnement pour provoquer, à l'avance du cycle de moulage, une extension de la tige de vanne (26) suffisamment au-delà de l'embout de buse (14, 32) pour amener la tige de vanne à dégager des débris accumulés en avant de la tige de vanne (26).

2. Ensemble formant vanne à tiroir (10, 12, 14) selon la revendication 1, dans lequel la zone de tiroir de vanne inclut un passage entre la cavité de moule (40) et l'orifice d'injection (32), et dans lequel dans la position avancée la tige de vanne est déplacée de manière à remplir sensiblement le passage.

3. Ensemble formant vanne à tiroir (10, 12, 14) selon la revendication 2, dans lequel ladite tige de vanne (26) a une paroi antérieure qui s'étend à travers ledit passage dans la position avancée, et une paroi annulaire continue s'étendant de celle-ci, qui s'étend complètement à l'intérieur dudit passage dans la position avancée.

4. Ensemble formant vanne à tiroir (10, 12, 14) selon l'une des revendications 1, 2 et 3, incluant au moins un piston (22, 24), connecté à ladite tige de vanne (26), et capable de fonctionner pour déplacer ladite tige de valve (26) entre la position ouverte, la position fermée, et la position avancée.

5. Ensemble formant vanne à tiroir (10, 12, 14) selon la revendication 4, incluant au moins trois entrées d'air dont la fonction est de déplacer ledit au moins un piston (22, 24).

6. Ensemble formant vanne à tiroir (10, 12, 14) selon l'une quelconque des revendications précédentes, dans lequel ledit canal d'écoulement interne (28) est en communication avec un canal chauffé.

7. Ensemble formant vanne à tiroir (10, 12, 14) selon l'une quelconque des revendications précédentes, dans lequel ledit orifice de tiroir est configuré de façon à recevoir avec étanchement ladite tige de vanne, afin d'arrêter sensiblement l'écoulement de résine vers la cavité de moule (40).

8. Procédé pour le fonctionnement d'un ensemble formant vanne à tiroir (10, 12, 14) associé à un moule à injection (34, 40), l'ensemble formant vanne à tiroir (10, 12, 14) contenant un corps de buse et un embout de buse (14, 32), le corps de buse ayant un canal interne (30) qui se termine à l'embout de buse (14, 32), l'ensemble formant vanne à tiroir (10, 12, 14) incluant en outre une tige de vanne (26) située à l'intérieur du canal interne (30) et un actionneur de tige de vanne (22, 24) couplé à la tige de vanne (26) pour commander une position de la tige de vanne par rapport à l'embout de buse (14, 32), ledit procédé étant **caractérisé en ce que** :
à l'avance du commencement d'un cycle de moulage dans le moule à injection (34, 40), on fait fonctionner sélectivement et indépendamment l'actionneur de tige de vanne (22, 24) pour étendre la tige de vanne (26) au-delà de l'embout de buse (14, 32) de telle façon que la tige de vanne (26) agit pour dégager des débris accumulés en avant de la tige de vanne (26).

9. Procédé pour dégager des débris de matière plastique depuis le voisinage d'un orifice de tiroir (42) d'un bloc à tiroir (34), le procédé comprenant l'opération consistant à forcer une tige de vanne (26) d'un ensemble formant vanne à tiroir (10, 12, 14), pour qu'elle s'étende à travers l'orifice de tiroir indépendamment de l'utilisation de l'ensemble formant vanne à tiroir, et dans un cycle fonctionnel d'un processus de moulage par injection.
